# EUROPÄISCHE PATENTSCHRIFT

(11) **EP 1 049 594 B1**
(45) Veröffentlichungstag und Bekanntmachung des Hinweises auf die Patenterteilung: **05.10.2005**
(21) Anmeldenummer: 99906201.1
(22) Anmeldetag: 25.01.1999
(51) Int. Cl.: B60G 17/005, B60G 17/015, B60R 21/00, B60T 8/00

(54) **VERFAHREN UND VORRICHTUNG ZUM BETREIBEN EINES KRAFTFAHRZEUGES**
METHOD AND DEVICE FOR OPERATING A MOTOR VEHICLE
PROCEDE ET DISPOSITIF DE FONCTIONNEMENT D'UN VEHICULE A MOTEUR

(30) Priorität: 29.01.1998 DE 19803370
(43) Veröffentlichungstag der Anmeldung: 08.11.2000
(73) Patentinhaber: Piech, Ferdinand, 38436 Wolfsburg (DE)
(72) Erfinder: Piech, Ferdinand, 38436 Wolfsburg (DE)
(74) Vertreter: le Vrang, Klaus
(86) Internationale Anmeldenummer: PCT/EP1999/000462
(87) Internationale Veröffentlichungsnummer: WO 1999/038718

(56) Entgegenhaltungen:
- WO-A-91/08120
- DE-A- 4 019 732
- DE-A- 19 549 083
- DE-C- 4 436 162
- GB-A- 2 292 126
- US-A- 5 173 857
- PATENT ABSTRACTS OF JAPAN vol. 007, no. 244 (M-252), 28. Oktober 1983 & JP 58 131442 A (NIPPON DENSO KK), 5. August 1983
- PATENT ABSTRACTS OF JAPAN vol. 016, no. 343 (M-1285), 24. Juli 1992 & JP 04 103420 A (TOYOTA MOTOR CORP;OTHERS: 01), 6. April 1992
- PATENT ABSTRACTS OF JAPAN vol. 018, no. 366 (M-1636), 11. Juli 1994 & JP 06 099713 A (TOYOTA MOTOR CORP), 12. April 1994

## Beschreibung

Die Erfindung betrifft ein Verfahren und eine Vorrichtung zum Betreiben eines Kraftfahrzeuges mit einem Fahrwerk mit einer Federungs- und einer Dämpfungseinrichtung gemäß dem Oberbegriff den Patentansprüchen 1 und 7.

Heutige Kraftfahrzeuge weisen bereits eine Vielzahl von Sicherheitseinrichtungen auf, die grundsätzlich in passive und aktive Systeme eingeteilt werden können. Dabei kommt der Interaktion solcher Systeme aufgrund der sich rasant fortentwickelnden elektronischen Datenverarbeitung immer mehr Bedeutung zu. So sind bereits aktive oder semiaktive Fahrwerksreglungen bekannt, die elektronisch mit Motor- und Getriebemanagement verknüpft nach Maßgabe fahrzeugspezifischer Parameter die Feder- und Dämpfungseinrichtungen steuem und Funktionen wie Niveauregulierung, Antischlupf- und Antiblockier-Regelung der Räder sowie variable Dämpferkraftsteuerung (komfortbetont oder sportlich hart) erfüllen.

Durch die JP 58131442 A ist es ferner bekannt, über eine elektronische Steuerung bei oberhalb von Referenzwerten liegenden Beschleunigungs- oder Verzögerungssignaten, wie sie z. B. bei einer Vollbremsung auftreten können, die hydraulischen Stoßdämpfer zu verhärten, um starken Nickbewegungen des Kraftfahrzeugs (nose diving, nose upping) entgegenzuwirken.

Bei der DE 40 19 732 A1 hingegen wird zur Erzielung einer kleineren und kostengünstigeren Federungs- und Dämpfungseinrichtung sogar vorgeschlagen, bei einer definierten Querbeschleunigung die Dämpfungseinrichtung zu sperren bzw. hydraulisch zu blockieren und damit mit geringerem Systemaufwand die Kurvenverlagerung der gefederten Massen abzustützen. Die Steuerparameter dazu sind aber fahrspezifisch festgelegt, wobei sich die Frage stellt, ob eine derartige Lösung hinsichtlich Fahrkomfort und Fahrverhalten den zu stellenden Anforderungen genügen kann.

Aufgabe der vorliegenden Erfindung ist es, ein Verfahren vorzuschlagen, mit dem die Sicherheit eines Kraftfahrzeuges verbessert werden kann. Femer wird eine herstellungstechnisch günstige Vorrichtung zur Durchführung des Verfahrens vorgeschlagen.

Die verfahrensgemäße Lösung dieser Aufgabe gelingt gemäß Kennzeichen des Patentanspruches 1, indem die Federungs- und/oder Dämpfungseinrichtung bei Anliegen eines Crashsignales zumindest für einzelne Räder gesperrt wird.

So ist bei Kollisionen, z. B. einem Seitencrash des Kraftfahrzeuges, der dieser Aufschaukeleffekt beträchtlich. Aufgrund der ggf. hohen Aufprallenergie kann das Kraftfahrzeug zunächst auf der Anstoßseite nach unten eintauchen, wobei die Räder entsprechend Einfedem und kinetische Energie speichern. Dieses Eintauchen - bei dem das Kraftfahrzeug in der Regel zugleich durch Rutschen der Räder seitlich versetzt, ist dadurch bedingt, daß (z. B. bei Kollisionen mit einem anderen Kraftfahrzeug) der Anstoßpunkt durch die Stoßstange des kollidierenden Kraftfahrzeuges tiefer als der Schwerpunkt des seitlich angestoßenen Kraftfahrzeuges liegt. Bei dem anschließenden Verlagern der Karosserie in der Anstoßrichtung beschleunigen die eingefederten Räder ggf. unterstützt durch die Rückstellwirkung der Querstabilisator in beachtlichem Maße diese Verlagerung, wobei ggf. das Kraftfahrzeug sogar umstürzen kann. Dieses "Aufschaukeln" kann verständlicherweise noch stärker beobachtet werden, wenn das Kraftfahrzeug eine Dachlast trägt, weil dadurch der angesprochene Fahrzeug-Schwerpunkt noch weiter nach oben rückt.

Der beschriebene Aufschaukeleffekt wird erfindungsgemäß nun eliminiert, in dem bei Anliegen des Crashsignals, das in bekannter Weise durch einen Aufprallsensor bzw. Beschleunigungssensor generiert werden kann, die Federungs- und/oder Dämpfungseinrichtung verhärtet, bevorzugt jedoch gesperrt wird. Die ggf. in der Federungs- und Dämpfungseinrichtung durch das Eintauchen gespeicherte Energie ist quasi eingefroren und kann kein Drehmoment mehr um die Momentanzentren des Fahrwerkes bzw. um die durch die Momentanzentren verlaufende Rollachse des Kraftfahrzeuges ausüben. Zudem wird durch die blockierten Stoßdämpfer an der der Anstoßrichtung abgewandten Seite die Seitenstabilität des Kraftfahrzeuges erhöht.

Versuche haben gezeigt, daß dadurch ein ggf. unter ungünstigen Umständen auftretendes Umstürzen des Kraftfahrzeuges wirksam und zuverlässig vermieden werden kann.

Das Sperren der Federungs- und/oder Dämpfungseinrichtung kann bei einem Fahrwerk mit metallischen Federn (z. B. Schraubendruckfedern) und hydraulisch wirkenden Teleskopstoßdämpfern in an sich bekannter Weise dadurch bewerkstelligt werden, daß mittels eines elektrisch ansteuerbaren Ventils der Kolben mit Drosselbohrungen des Stoßdämpfers so ausgeführt wird, daß diese Drosselbohrungen in der einen Schaltstellung des Ventils verschlossen oder nahezu verschlossen sind; der Stoßdämpfer ist somit hydraulisch blockiert bzw. verhärtet - was auch für die kinematisch parallel geschalteten Federn gilt.

Das Crashsignal kann bevorzugt von einem oder mehreren vorhandenen Crashsensoren abgeleitet werden, z. B. wenn das Kraftfahrzeug mit einem Airbag-System ausgestattet ist.

Es kann somit in kostengünstiger Weise auf baulich im Kraftfahrzeug bereits vorhandene Mittel zurückgegriffen werden, die lediglich entsprechend zu verknüpfen sind.

Gleiches gilt, wenn im Kraftfahrzeug bereits ein Antiblockier-Bremssystem (ABS) montiert ist. In diesem Fall kann von dem ABS-Steuergerät ein Signal abgeleitet werden, wenn eine Vollbremsung des Kraftfahrzeuges mit entsprechender ABS-Regelung (Bremsdruckmodulation nach Maßgabe der positiven und negativen Radbeschleunigungen beim Bremsen) vorliegt, ggf. unterstützt durch ein Drucksignal der Bremseinheit (hoher Druck entspricht hoher Verzögerung bei griffiger Fahrbahn).

Für die Anfahrbeschleunigung, aber auch für die Bremsverzögerung, kann ferner ein separater Beschleunigungsaufnehmer alternativ oder zusätzlich vorgesehen sein.

Ein Ausführungsbeispiel der Erfindung ist im folgenden mit weiteren Einzelheiten näher erläutert. Die anliegende schematische Zeichnung zeigt ein Phantombild eines Kraftfahrzeuges mit semiaktivem Fahrwerk und mit Beschleunigungssensoren, die mit dem elektronischen Steuergerät des Fahrwerks verbunden sind.

Das allgemein mit 10 bezeichnete Kraftfahrzeug weist ein Fahrwerk mit vorderen Radaufhängungen 12 und hinteren Radaufhängungen 14 auf, die in bekannter Weise die Führung der Räder 16,18 übernehmen. Die vorderen Räder 16 sind über eine nur angedeutete Lenkung 20 lenkbar. Das Kraftfahrzeug 10 ist mit einem Antiblockier-Bremssystem mit einem Steuergerät 40 versehen. Das Bremssystem ist bekannter Bauart und deshalb nicht dargestellt und beschrieben.

Die Federungs- und Dämpfungseinrichtung zur Karosserie 15 des Kraftfahrzeuges weist hydraulische Teleskop-Stoßdämpfer 22,24 auf, die mit nicht dargestellten Schraubendruckfedern als sogenannte Federbeine ausgebildet sind. Es sind jedoch auch andere Stoßdämpfer- und Federanordnungen denkbar, z. B. auch Gasdruckdämpfer.

Die Stoßdämpfer 22,24 sind mit elektrisch ansteuerbaren Bypass-Ventilen 26 versehen, die über elektrische Leitungen mit einem zentralen, elektronischen Steuergerät 28 verbunden sind.

Die hydraulische Versorgung der Stoßdämpfer 22,24 des dargestellten, semiaktiven Fahrwerks erfolgt in üblicher Weise und ist deshalb ebenfalls nicht dargestellt. Derartige Fahrwerke bzw. Stoßdämpfer sind z. B. in den Patentschriften DE 41 05 937 C2 und DE 42 20 617 C1 detailliert beschrieben.

Über die Ventile 26 kann die Dämpfungseigenschaft der Stoßdämpfer 22,24 nach fahrzeugspezifischen Parametern in weich, mittel oder hart bzw. komfortbetont, mittel oder sportlich eingestellt werden.

Gemäß der vorliegenden Erfindung können die Stoßdämpfer 22,24 über das Steuergerät 28 und die elektrischen Ventile 26 auch gesperrt werden, wobei hier die Drosselwirkung gegen unendlich gesteuert ist, so daß die Stoßdämpfer 22,24 hydraulisch blockiert sind.

Im Kraftfahrzeug 10 sind Aufprallsensoren bzw. Airbagsensoren 30,32 angeordnet, die in bekannter Weise als Beschleunigungsaufnehmer ausgebildet sind und die bei einer Längs- und/oder Querbeschleunigung des Kraftfahrzeuges 10 bei einem Aufprall auf ein Hindernis oder einem Zusammenstoß mit einem Kollisionsfahrzeug ab einem definierten Beschleunigungswert über ein Steuergerät 34 den nicht dargestellten Airbag (Luftsack) pyrotechnisch aktivieren. Der auslösende Beschleunigungswert liegt selbstverständlich über den maximal auftretenden Quer- und Längsbeschleunigungswerten des Kraftfahrzeuges 10 im Fahrbetrieb.

Dabei sind das Steuergerät 34 für die Air-bag-Aktivierung und das Steuergerät 28 für die Fahrwerksregelung durch eine Datenleitung 36 miteinander verbunden. Über die Datenleitung 36 wird ein Crashsignal an das Steuergerät 28 abgegeben, aufgrund dessen das Steuergerät 28 eine Sperrung mehrerer oder aller Stoßdämpfer 22,24 aktiviert.

Wird z. B. über den Air-bag-Sensor 32 eine Querbeschleunigung > 2g gemessen, so werden abhängig von der erfaßten Anstoßrichtung (z. B. Pfeil 38) von dem Steuergerät 34 ein Crashsignal abgegeben, das über das Fahrwerk-Steuergerät 28 bevorrangt eine Sperrung der in Fahrtrichtung rechts liegenden Stoßdämpfer 22,24 aktiviert. Diese hydraulische Blockierung der Stoßdämpfer 22,24 verhindert - wie eingangs beschrieben - das Aufschaukeln der Karosserie um die durch die Rollzentren der Radaufhängungen 12,14 verlaufende Rollachse und verstärkt die Seitenstabilität.

Es versteht sich, daß bei einer entgegengesetzt liegenden Anstoßrichtung die linken Stoßdämpfer 22,24 des Kraftfahrzeuges entsprechend angesteuert bzw. gesperrt werden.

Im Rahmen der Erfindung können aber auch unabhängig von der Anstoßrichtung alle Stoßdämpfer 22,24 gesperrt werden; ggf. kann dies auch bei einem Heckaufprall bei in Fahrzeuglängsrichtung auftretender Beschleunigung durchgeführt werden.

Die Verhärtung oder Sperrung der Stoßdämpfer 22,24 kann nach dem Crash mittels eines Zeitgliedes in dem Steuergerät 28 oder mit Unterbrechung des Betriebsstromkreises (Ausschalten der Zündung) wieder aufgehoben werden.

Das Steuergerät 28 ist ferner über eine weitere Datenleitung 38 mit dem Steuergerät 40 des Antiblockier-Bremssystems verbunden.

Zudem ist ein weiterer Beschleunigungssensor 42 im Kraftfahrzeug angeordnet, der die Längs- und Querbeschleunigungen des Kraftfahrzeuges 10 erfaßt und bei über regulären Beschleunigungswerten liegendem Schwellwert ebenfalls ein Signal an das Steuergerät 28 abgibt.

Dementsprechend wird bei Anliegen eines Beschleunigungswertes entsprechend einer extremen Anfahrbeschleunigung, Querbeschleunigung und/oder Bremsverzögerung und/oder einem Signal des Steuergerätes 40 bei einer Bremsblockierregelung (Vollbremsung) ebenfalls die Verhärtung oder Sperrung der Stoßdämpfer 22,24 oder nur der vorderen Stoßdämpfer 22 bei Verzögerung bzw. nur der hinteren Stoßdämpfer 24 bei Beschleunigung und ggf. nur der kurvenäußeren Stoßdämpfer 22,24 bei Querbeschleunigung gesteuert.

Wesentlich ist dabei, daß die vorbeschriebene Verhärtung oder Sperrung der Stoßdämpfer 22,24 außerhalb des regulären Fahrbetriebes liegt und somit die reguläre Fahrwerkssteuerung oder -regelung nicht beeinflußt.

Anstelle einer Sperrung der Stoßdämpfer 22,24 - die insbesondere bei auf dem Kraftfahrzeug beförderten Dachlasten (ggf. über einen Beladungssensor erfaßbar) bevorzugt wird - kann bei auftretendem Crashsignal auch unabhängig von den fahrspezifischen Parametern der Fahrwerksregelung nur eine Verhärtung (z. B. auf sportlich oder noch härter) der Dämpfungseinrichtung gesteuert werden, die ebenfalls dem Aufschauketeffekt in ggf. ausreichendem Maße entgegenwirkt. Ggf. kann die Verhärtung oder Sperrung der Stoßdämpfer zusätzlich beladungsabhängig erfolgen, z. B. mittels eines Lastsensors an einem Dachträger des Kraftfahrzeuges.

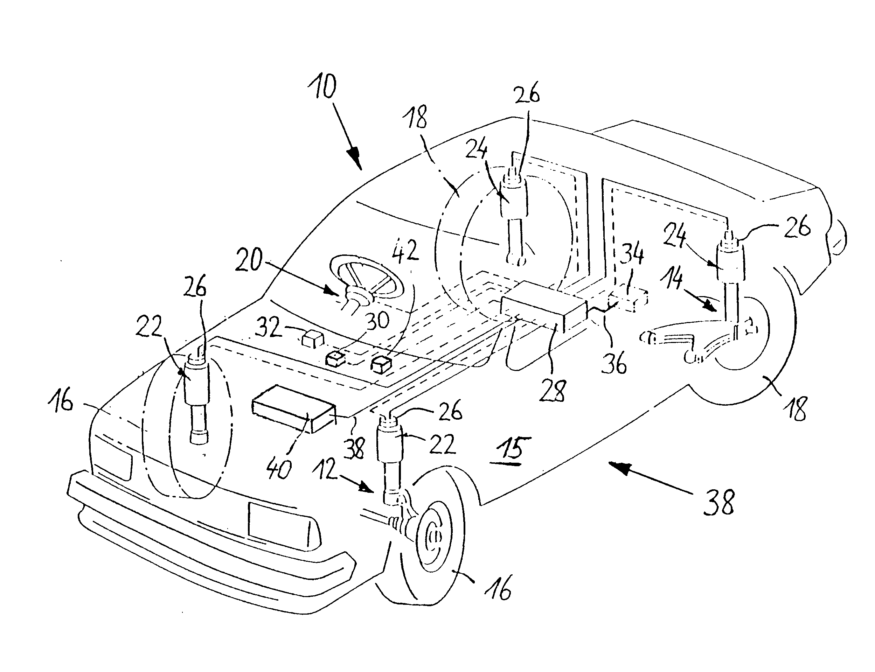

## Patentansprüche

1. Verfahren zum Betreiben eines Kraftfahrzeuges mit einem Fahrwerk mit einer Federungs- und einer Dämpfungseinrichtung und mit einem elektronischen Steuergerät, über das bei Anliegen eines außerhalb des regulären Fahrbetriebes liegenden Beschleunigungssignals die Federungs- und/oder Dämpfungseinrichtung (22,24) zumindest für einzelne Räder (16,18) verhärtet oder gesperrt wird, **dadurch gekennzeichnet, daß** als Beschleunigungssignal ein oberhalb einer im Fahrbetrieb maximal auftretenden Beschleunigung liegendes Crashsignal mittels zumindest eines Aufprallsensors (30,32) verwendet wird.

2. Verfahren nach Anspruch 1, **dadurch gekennzeichnet, daß** mit dem Aufprallsensor (30,32) weitere Sicherheitseinrichtungen (34) des Kraftfahrzeuges angesteuert werden.

3. Verfahren nach Anspruch 1 oder 2, **dadurch gekennzeichnet, daß** als Aufprallsensor ein oder mehrere Air-bag-Sensoren (30,32) verwendet werden.

4. Verfahren nach einem oder mehreren der vorhergehenden Ansprüche, **dadurch gekennzeichnet, daß** bei einem Seitencrash des Kraftfahrzeuges (10) zumindest die Dämpfungseinrichtung (22,24) an der stoßabgewandten Seite des Kraftfahrzeuges (10) gesperrt wird.

5. Verfahren nach einem oder mehreren der Ansprüche 1 bis 4, **dadurch gekennzeichnet, daß** das Crashsignal zur Ansteuerung der Dämpfungseinrichtung (22,24) nur bei definierten Beladungszuständen des Kraftfahrzeuges generiert wird.

6. Verfahren nach einem oder mehreren der Ansprüche 1 bis 5, **dadurch gekennzeichnet, daß** die Ansteuerung der Dämpfungseinrichtung (22,24) über ein Zeitglied und/oder durch Unterbrechung des Betriebsstromkreises des Kraftfahrzeuges (10) wieder aufgehoben wird.

7. Vorrichtung zur Durchführung des Verfahrens nach einem oder mehreren der vorhergehenden Ansprüche, wobei die Dämpfungseinrichtung mittels hydraulischer Stoßdämpfer (22,24) gebildet ist, **dadurch gekennzeichnet, daß** zumindest jeweils zwei Stoßdämpfer (22,24) über elektrisch angesteuerte Ventile (26) hydraulisch verhärtet werden bzw. gesperrt werden, wobei die Ventile (26) über ein mit zumindest einem Aufprallsensor (42,30,32) verbundenes Steuergerät (28) angesteuert sind.

8. Vorrichtung nach Anspruch 7, **dadurch gekennzeichnet, daß** das Kraftfahrzeug (10) mit einer die Dämpfungseigenschaften der Stoßdämpfer (22,24) (z. B. weich, mittel, hart) verändernden Einrichtung, mit einem Steuergerät (28) und mit an den Stoßdämpfern (22,24) angeordneten Ventilen (26) versehen ist und daß das Steuergerät (28) ferner mit zumindest einem Aufprallsensor (42,30,32) verbunden ist und zusätzlich die Verhärtung oder die Sperrung der Stoßdämpfer (22,24) steuert.

9. Vorrichtung nach Anspruch 7 oder 8, **dadurch gekennzeichnet, daß** der Beschleunigungssensor durch im Kraftfahrzeug (10) bereits vorhandene Air-bag-Sensoren (30,32) gebildet ist, die mit dem Steuergerät (28) mittelbar oder unmittelbar verbunden sind.

10. Vorrichtung nach einem oder mehreren der Ansprüche 7 bis 9, **dadurch gekennzeichnet, daß** das Steuergerät (28) ferner mit dem Antiblockier-Bremssystem (40) des Kraftfahrzeuges (10) verbunden ist und daß das Bremssystem (40) bei einer einer Vollbremsung entsprechenden Regelfunktion (Bremseneingriff) ein Signal zur Verhärtung oder Sperrung zumindest der vorderen Stoßdämpfer (22) abgibt.

## Claims

1. Method of operating a motor vehicle having a chassis with a suspension means and a damping means and with an electronic control device by way of which the suspension means and/or the damping means (22,24) is stiffened or locked at least for individual wheels (16,18) in the presence of an acceleration signal that lies outside normal driving operations, **characterised in that** there is used, as acceleration signal, by way of at least one impact sensor (30,32), a crash signal that lies above maximum acceleration occurring during driving operations.

2. Method according to claim 1, **characterised in that** the impact sensor (30,32) controls further safety devices (34) of the motor vehicle.

3. Method according to claim 1 or 2, **characterised in that** one or more air bag sensors (30,32) are used as impact sensor.

4. Method according to one or more of the preceding claims, **characterised in that** in the case of a side crash of the motor vehicle (10) at least the damping means (22,24) at the side of the motor vehicle (10) remote from the impact is locked.

5. Method according to one or more of claims 1 to 4, **characterised in that** the crash signal for controlling the damping means (22,24) is generated only for defined load conditions of the motor vehicle.

6. Method according to one or more of claims 1 to 5, **characterised in that** control of the damping means (22,24) is again ended via a time function element and/or by interruption of the electric operating system of the motor vehicle (10).

7. Arrangement for carrying out the method according to one or more of the preceding claims, in which the damping means consists of hydraulic shock absorbers (22,24), **characterised in that** in each case at least two shock absorbers (22,24) are hydraulically stiffened or locked via electrically controlled valves (26), the valves (26) being controlled by a control device (28) connected to at least one impact sensor (42,30,32).

8. Arrangement according to claim 7, **characterised in that** the motor vehicle (10) is provided with means for varying the damping characteristics of the shock absorbers (22,24) (e.g. soft, medium, hard), and with a control device (28), and with valves (26) arranged on the shock absorbers (22,24), and **in that** the control device (28) is furthermore connected with at least one impact sensor (40,30,32) and additionally controls the stiffening or the locking of the shock absorbers (22,24).

9. Arrangement according to claim 7 or 8, **characterised in that** the acceleration sensor consists of air bag sensors (30,32) already present in the motor vehicle (10) and which are connected directly or indirectly with the control device (28).

10. Arrangement according to one or more of claims 7 to 9, **characterised in that** the control device (28) is furthermore connected with the anti lock braking system (40) of the motor vehicle (10) and **in that** the braking system (40) delivers a signal for stiffening or locking, at least of the front shock absorbers (22), in case of a regulating function (brake action) corresponding to a hard stop.

## Revendications

1. Procédé de fonctionnement d'un véhicule automobile, comprenant un dispositif de roulement avec un dispositif de suspension et un dispositif d'amortissement, et avec un appareil de commande électronique, par l'intermédiaire duquel, en cas d'application d'un signal d'accélération se trouvant hors du fonctionnement de roulement régulier, le dispositif de suspension et/ou d'amortissement (22, 24) est durci ou bloqué au moins pour des roues (16, 18) spécifiques, **caractérisé en ce qu'**on utilise, comme signal d'accélération, un signal de collision, d'une valeur supérieure à une accélération maximale se produisant lors du roulement, signal de collision obtenu à l'aide d'au moins un capteur d'impact (30, 32).

2. Procédé selon la revendication 1, **caractérisé en ce qu'**on commande, avec le capteur d'impact (30, 32), d'autres dispositifs de sécurité (34) du véhicule automobile.

3. Procédé selon la revendication 1 ou 2, **caractérisé en ce qu'**on utilise comme capteur d'impact un ou plusieurs capteurs de coussins de sécurité gonflables (30, 32).

4. Procédé selon l'une ou plusieurs des revendications précédentes, **caractérisé en ce que**, lors d'une collision latérale du véhicule automobile (10), au moins le dispositif d'amortissement (22, 24) est bloqué sur le côté, opposé au choc, du véhicule automobile (10).

5. Procédé selon l'une ou plusieurs des revendications 1 à 4, **caractérisé en ce que** le signal d'impact est généré pour amorcer le dispositif d'amortissement (22, 24) uniquement pour des états de chargement définis du véhicule automobile.

6. Procédé selon l'une ou plusieurs des revendications 1 à 5, **caractérisé en ce que** l'amorçage du dispositif d'amortissement (22, 24) est supprimé, à nouveau par l'intermédiaire d'un système de temporisation et/ou par interruption du circuit électrique de fonctionnement du véhicule automobile (10).

7. Dispositif de mise en oeuvre du procédé selon l'une ou plusieurs des revendications précédentes, le dispositif d'amortissement étant formé par des amortisseurs de choc (22, 24) hydrauliques, **caractérisé en ce qu'**au moins chaque fois deux amortisseurs de choc (22, 24) sont durcis ou bloqués hydrauliquement, par l'intermédiaire de soupapes (26) à commande électrique, les soupapes (26) étant commandées par l'intermédiaire d'un appareil de commande (28) relié à au moins un capteur d'impact (42, 30, 32).

8. Dispositif selon la revendication 7, **caractérisé en ce que** le véhicule automobile (10) est muni d'un dispositif, modifiant les propriétés d'amortissement des amortisseurs de choc(22, 24) (par exemple souple, moyen, dur), d'un appareil de commande (28), et de soupapes (26) disposées sur les amortisseurs de choc(22, 24), et **en ce que** l'appareil de commande (28) est en outre relié à au moins un capteur d'impact (42, 30, 32) et commande en plus le durcissement ou le blocage des amortisseurs (22, 24).

9. Dispositif selon la revendication 7 ou 8, **caractérisé en ce que** le capteur d'accélération est formé par des capteurs de coussins de sécurité gonflables (30, 32), déjà existants dans le véhicule automobile (10) et reliés, indirectement ou directement, à l'appareil de commande (28).

10. Dispositif selon l'une ou plusieurs des revendications 7 à 9, **caractérisé en ce que** l'appareil de commande (28) est en outre relié au système de freinage antiblocage (40) du véhicule automobile (10), et **en ce que** le système de freinage (40), en cas d'une fonction de réglage correspondant à un freinage à fond (intervention dans le freinage), délivre un signal visant à durcir ou à bloquer au moins les amortisseurs avant (22).
